# EUROPEAN PATENT APPLICATION

(11) **EP 4 645 182 A1**
(43) Date of publication of application: **05.11.2025**
(21) Application number: 23913085.9
(22) Date of filing: 11.12.2023
(51) Int. Cl.: G06Q 10/0631, G06Q 10/1093, G06F 3/048

(54) **DISPLAY METHOD AND APPARATUS, AND ELECTRONIC DEVICE**

(30) Priority: 26.12.2022 CN 202211678233
(71) Applicant: Lemon Inc., Grand Cayman, KY1-1205 (KY)
(72) Inventor: SHENG, Xinyu, Beijing 100028 (CN); SHAO, Ying, Beijing 100028 (CN)
(74) Representative: Grünecker Patent- und Rechtsanwälte PartG mbB
(86) International application number: PCT/SG2023/050819
(87) International publication number: WO 2024/144452

(57) **Abstract**

The present disclosure provides a display method and apparatus and an electronic device , and the method includes: displaying a resource allocation region, the resource allocation region including at least one division line, the at least one division line dividing the resource allocation region into a plurality of sub-regions corresponding to a plurality of groups to be allocated, each sub-region comprising a timeline, and a plurality of sub-periods corresponding to a plurality of timelines being consecutive periods; in response to a touch operation on the at least one division line, adjusting the sub-regions corresponding to the plurality of groups to be allocated in the resource allocation region, to adjust the sub-periods corresponding to the sub-regions. The complexity of resource allocation operations is reduced.

## Description

This application claims priority to Chinese Patent Application No. 202211678233.8, filed on December 26, 2022, and entitled "DISPLAY METHOD AND APPARATUS AND ELECTRONIC DEVICE", the entirety of which is incorporated herein by reference.

### FIELD

Embodiments of the present disclosure relate to the field of computer technologies, and in particular, to a display method and apparatus and an electronic device.

### BACKGROUND

The resource allocation application may allocate corresponding resources to the plurality of groups to be allocated. For example, the workforce allocation application may allocate a working period for 4 work shifts within 1 day, and a working duration corresponding to each work shift is 6 hours.

Currently, a user may set corresponding resources of each group to be allocated in a resource allocation application. For example, in the workforce allocation application, the user touches a drop-down box component corresponding to each workforce team, and sets the start time instant and the end time instant of each workforce team in each drop-down box component, and then allocates workforce for a plurality of workforce team. However, when the user modifies the corresponding resources of one of the groups to be allocated, the user also needs to modify the resources of the other groups to be allocated, thereby resulting in a relatively high complexity of the resource allocation operation.

### SUMMARY

The present disclosure provides a display method and apparatus and an electronic device, which are used for solving the technical problem of high complexity of resource allocation operation in the prior art.

According to a first aspect, the present disclosure provides a display method, including:
displaying a resource allocation region, the resource allocation region including at least one division line, the at least one division line dividing the resource allocation region into a plurality of sub-regions corresponding to a plurality of groups to be allocated, each sub-region including a timeline, and a plurality of sub-periods corresponding to a plurality of timelines being consecutive periods;
in response to a touch operation on the at least one division line, adjusting the sub-regions corresponding to the plurality of groups to be allocated in the resource allocation region, to adjust the sub-periods corresponding to the sub-regions.

According to a second aspect, the present disclosure provides a display apparatus, the display apparatus includes a display module and a response module, where:
the display module is configured to display a resource allocation region, the resource allocation region including at least one division line, the at least one division line dividing the resource allocation region into a plurality of sub-regions corresponding to a plurality of groups to be allocated, each sub-region including a timeline, and a plurality of sub-periods corresponding to a plurality of timelines being consecutive periods;
the response module is configured to, in response to a touch operation on the at least one division line, adjust the sub-regions corresponding to the plurality of groups to be allocated in the resource allocation region, to adjust the sub-periods corresponding to the sub-regions.

According to a third aspect, an embodiment of the present disclosure provides an electronic device, including a processor and a memory;
the memory stores computer-executable instructions;
the processor executes the computer-executable instructions stored in the memory, to cause the at least one processor executes the display method according to the first aspect and various possible implementations of the first aspect.

According to a fourth aspect, an embodiment of the present disclosure provides a computer-readable storage medium. The computer-readable storage medium stores computer-executable instructions which, when executed by a processor, implement the display method according to the first aspect and various possible implementations of the first aspect.

According to a fifth aspect, an embodiment of the present disclosure provides a computer program product, including a computer program which, when executed by a processor, implements the display method according to the first aspect and various possible embodiments of the first aspect.

The present disclosure provides a display method and apparatus and an electronic device. The electronic device may display a resource allocation region, where the resource allocation region includes at least one division line, the at least one division line divides the resource allocation region into a plurality of sub-regions corresponding to a plurality of groups to be allocated, each sub-region includes a timeline, and a plurality of sub-periods corresponding to a plurality of timelines are consecutive periods; and in response to a touch operation on the at least one division line, adjust the sub-regions corresponding to the plurality of groups to be allocated in the resource allocation region, to adjust the sub-periods corresponding to the sub-regions. In the above method, since the at least one division line divides the resource allocation region into the sub-regions corresponding to the plurality of groups to be allocated, when the user moves the division line, the electronic device may automatically adjust the timelines of the sub-regions on both sides of the division line to change the sub-periods corresponding to the groups to be allocated of the sub-regions, so that the user does not need to modify the sub-periods corresponding to the sub-regions for multiple times, thereby reducing the complexity of the resource allocation operation.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
FIG. 1 is a schematic diagram of an application scenario according to an embodiment of the present disclosure;
FIG. 2 is a schematic flowchart of a display method according to an embodiment of the present disclosure;
FIG. 3 is a schematic diagram of a plurality of timelines according to an embodiment of the present disclosure;
FIG. 4 is a schematic diagram of a process of displaying a first time window according to an embodiment of the present disclosure;
FIG. 5 is a schematic diagram of updating a first time window according to an embodiment of the present disclosure;
FIG. 6A is a schematic diagram of releasing a first division line according to an embodiment of the present disclosure;
FIG. 6B is another schematic diagram of releasing a first division line according to an embodiment of the present disclosure;
FIG. 7 is a schematic diagram of a process of updating resource allocation information according to an embodiment of the present disclosure;
FIG. 8 is a schematic diagram of adjusting a timeline of a work shift region according to an embodiment of the present disclosure;
FIG. 9 is a schematic diagram of a method for dividing a second sub-region according to an embodiment of the present disclosure;
FIG. 10 is a schematic diagram of displaying a second division line according to an embodiment of the present disclosure;
FIG. 11 is a schematic diagram of a process of dividing two sub-regions according to an embodiment of the present disclosure;
FIG. 12 is a schematic structural diagram of a display apparatus according to an embodiment of the present disclosure;
FIG. 13 is a schematic structural diagram of an electronic device according to an embodiment of the present disclosure.

### DETAILED DESCRIPTION

Exemplary embodiments will be described in detail herein, examples of which are illustrated in the accompanying drawings. The following description relates to the accompanying drawings, in which like numerals indicate like or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

For ease of understanding, the concepts involved in the embodiments of the present disclosure are described below.

An electronic device is a device having a wireless transceiver function. The electronic device may be deployed on land, including indoor or outdoor, handheld, wearable, or vehicle-mounted. The electronic device may be a mobile phone, a tablet computer (Pad), a computer with a wireless transceiver function, a virtual reality (VR) electronic device, an augmented reality (AR) electronic device, a wireless terminal in industrial control, a vehicle-mounted electronic device, a wireless terminal in a self-driving, a wireless electronic device in a remote medical device, a wireless electronic device in a smart grid, a wireless electronic device in transportation safety, a wireless electronic device in a smart city, a wireless electronic device in a smart home, a wearable electronic device, and the like. The electronic device according to the embodiments of the present disclosure may also be referred to as a terminal, user equipment (UE), an access electronic device, an vehicle-mounted terminal, an industrial control terminal, a UE unit, a UE station, a mobile station, a mobile platform, a remote station, a remote electronic device, a mobile device, a UE electronic device, a wireless communication device, a UE agent, or a UE apparatus. The electronic device may also be stationary or mobile.

In the related art, a user may set corresponding resources of a plurality of groups to be allocated through a resource allocation application. For example, when the user may allocate workforce for 3 workforce team within 1 day in the workforce allocation application, the user needs to set a start time instant and an end time instant corresponding to each group, and after each group completes the setting, the electronic device may display a workforce allocation table. However, when the user modifies the work shift time period corresponding to one work shift, the user also needs to modify the work shift time periods of other work shifts, for example, the time period of work shift A is 8 o'clock to 10 o'clock, the time period of work shift B is 10 o'clock to 12 o'clock, and if the user modifies the time period of work shift A to 8 o'clock to 9 o'clock, the user also needs to modify the time period of work shift B to 9 o'clock to 12 o'clock, which leads to higher complexity of resource allocation operation.

In order to solve the problem in the related art, an embodiment of the present disclosure provides a display method. The electronic device may display a resource allocation region, where the resource allocation region includes at least one division line, the at least one division line divides the resource allocation region into a plurality of sub-regions corresponding to a plurality of groups to be allocated, each sub-region includes a timeline, and a plurality of sub-periods corresponding to a plurality of timelines are consecutive periods; in response to a touch operation on the first division line of the plurality of division lines, display a first time window including a time instant corresponding to the first division line; and in response to a drag operation on the first division line, adjust the timelines of first sub-regions on both sides of the first division line. In this way, the user may intuitively view the resource allocation information of the plurality of groups to be allocated in an entire time period, thereby improving the user experience, and when the user adjusts the division line, the sub-periods of the sub-regions on both sides of the division line may be automatically modified without user input, thereby reducing the complexity of the resource allocation operation.

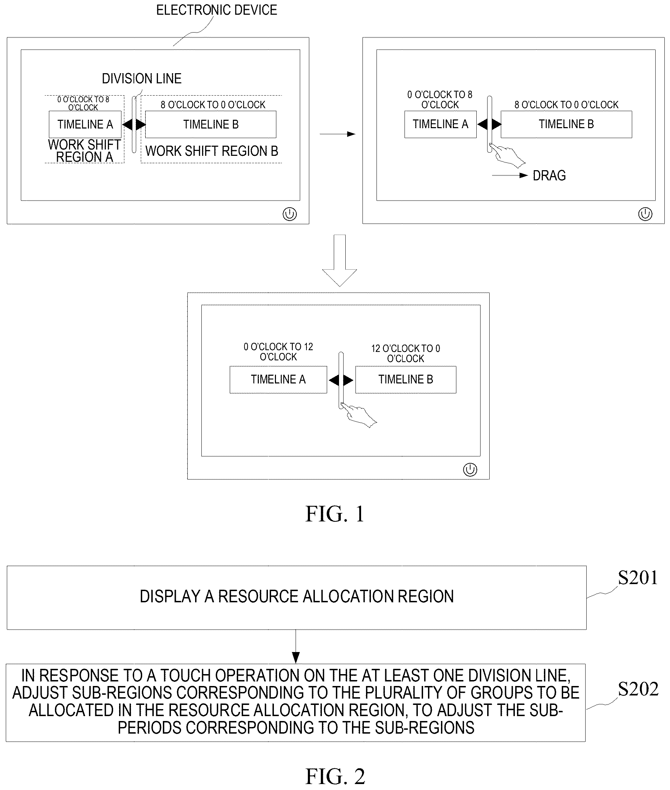

An application scenario of the embodiments of the present disclosure will be described below with reference to FIG. 1.

FIG. 1 is a schematic diagram of an application scenario according to an embodiment of the present disclosure. Referring to FIG. 1, an electronic device is included. The electronic device may display a workforce allocation region, the workforce allocation region includes a division line, the left side of the division line is a work shift region A, and the right side of the division line is a work shift region B. The work shift region A includes a timeline A, the shift region B includes a timeline B, the work shift time period corresponding to the timeline A is 0 o'clock to 8 o'clock, and the work shift time period corresponding to the timeline B is 8 o'clock to 0 o'clock.

Referring to FIG. 1, when the user drags the division line to the right, the division line moves to the right, the timeline A is extended to the right, and the timeline B is shortened from the right. When the user ceases dragging, the timeline A stops being extended, the timeline B stops being shortened, and the work shift time period corresponding to the timeline A becomes 0 o'clock to 12 o'clock, and the work shift time period corresponding to the timeline B is 12 o'clock to 0 o'clock. In this way, the user may intuitively see the work shift information, the user experience may be improved. The user only needs to drag the division line, the electronic device may adjust the work shift time period corresponding to the work shift, the user does not need to reset the start time instant and the end time instant for each work shift, and the workforce allocation complexity is reduced.

It should be noted that FIG. 1 is merely an exemplary application scenario of the embodiments of the present disclosure, and is not a limitation on the application scenario of the embodiments of the present disclosure.

The technical solutions of the present disclosure and how the technical solutions of the present disclosure solve the above technical problems are described in detail below with reference to specific embodiments. The following several specific embodiments may be combined with each other, and the same or similar concepts or processes may not be repeated in some embodiments. Embodiments of the present disclosure will be described below with reference to the accompanying drawings.

FIG. 2 is a schematic flowchart of a display method according to an embodiment of the present disclosure. Referring to FIG. 2, the method may include the following steps.

S201, a resource allocation region is display.

The executing body of the embodiment of the present disclosure may be an electronic device or a display device provided in the electronic device. The display device may be implemented by software, and the display device may also be implemented by combining software and hardware, which is not limited in the embodiments of the present disclosure.

The resource allocation region may be a workforce allocation region, and the workforce allocation region may allocate workforce for a plurality of work shifts. For example, by the operation of the user in the workforce allocation region, the workforce may be allocated to the plurality of work shifts in the workforce allocation region. Optionally, in response to a touch operation on the workforce allocation application, the electronic device may display a workforce allocation region. For example, when the user clicks the workforce allocation application, the display page of the electronic device may display a workforce allocation page, and the workforce allocation page includes a workforce allocation region.

It should be noted that the resource allocation region in the embodiments of the present disclosure may also be an allocation region of another resource, which is not limited in the embodiments of the present disclosure.

Optionally, the resource allocation region includes at least one division line. The division line may be used to divide the resource allocation region. For example, the at least one division line may divide the resource allocation region into sub-regions corresponding to the plurality of groups to be allocated. For example, if the workforce allocation region includes 1 division line, the division line may divide the workforce allocation region into 2 work shift regions, and if the workforce allocation region includes 2 division lines, the division lines may divide the workforce allocation region into 3 work shift regions.

Optionally, each sub-region corresponds to one group to be allocated, each sub-region includes a timeline, and a sub-period corresponding to the timeline is a time period of the group to be allocated. For example, the sub-region corresponding to the group to be allocated may be work shift regions corresponding to the plurality of workforce teams, and the sub-period may be a work shift time period of the workforce team. For example, the work shift region may include a timeline, and a time period corresponding to each timeline is a work shift time period corresponding to the work shift region. For example, the work shift region A includes the timeline 1, the work shift region B includes the timeline 2, and if the time period corresponding to the timeline 1 is 8 o'clock to 12 o'clock, and the time period corresponding to the timeline 2 is 14 o'clock to 16 o'clock, the electronic device determines that the workforce team corresponding to the work shift region A works at 8 o'clock to 12 o'clock, and the workforce team corresponding to the work shift region B works at 14 o'clock to 16 o'clock.

Optionally, the plurality of sub-periods corresponding to the plurality of timelines are consecutive time periods. For example, if the resource allocation region includes the sub-region A, the sub-region B, and the sub-region C, the sub-region A includes the timeline 1, the sub-region B includes the timeline 2, and the sub-region C includes the timeline 3, then the sub-periods corresponding to the timeline 1, the timeline 2, and the timeline 3 are consecutive time periods. For example, a sub-period corresponding to the timeline 1 is 24 o'clock to 8 o'clock, a sub-period corresponding to the timeline 2 is 8 o'clock to 16 o'clock, and a sub-period corresponding to the timeline 3 is 16 o'clock to 14 o'clock. In this way, the sub-periods of the three groups to be allocated are consecutive time periods, which reduces the complexity of resource allocation.

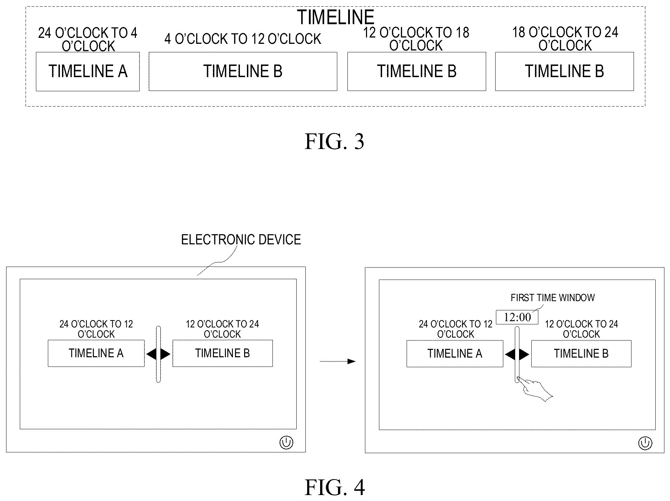

A plurality of timelines is described below with reference to FIG. 3.

FIG. 3 is a schematic diagram of a plurality of timelines according to an embodiment of the present disclosure. Please refer to FIG. 3, which includes timelines. The time duration corresponding to a timeline is 24 hours (24 o'clock to 24 o'clock), and the timelines include a timeline A, a timeline B, a timeline C, and a timeline D. A sub-period corresponding to the timeline A is 24 o'clock to 4 o'clock, a sub-period corresponding to the timeline B is 4 o'clock to 12 o'clock, a sub-period corresponding to the timeline C is 12 o'clock to 18 o'clock, and a sub-period corresponding to the timeline D is 18 o'clock to 24 o'clock. In this way, the sub-periods corresponding to the plurality of groups to be allocated are consecutive periods.

It should be noted that the length of the timeline is related to the sub-period, the longer the sub-period, the longer the timeline, the shorter the sub-period, and the shorter the timeline, when workforce allocation is performed, the workforce pre-allocation period may be any period, for example, the workforce pre-allocation period may be 1 day, 1 week, or 1 month, which is not limited in the embodiments of the present disclosure.

It should be noted that, when the electronic device displays the resource allocation region for the first time, the division line in the resource allocation region may be a predetermined number. For example, when the electronic device starts to display the workforce allocation region, the workforce allocation region includes 3 division lines, and the 3 division lines averagely divide the workforce allocation region into the work shift regions corresponding to the 4 workforce teams.

It should be noted that the resource allocation region further includes a setting control for the resource allocation period. For example, the user may set a total period of resource allocation in the setting control of the resource allocation period. For example, the user may set 1 day in the setting control, and the total period of resource allocation is 24 hours.

It should be noted that the timeline in the resource allocation region may display time related mapping information. For example, if the work shift time period corresponding to the timeline of the work shift region is holiday, the timeline may display holiday information, and may also display the work shift wage (e.g., double salary) corresponding to the work shift.

S202, in response to a touch operation on the at least one division line, the sub-regions corresponding to the plurality of groups to be allocated in the resource allocation region are adjusted, to adjust the sub-periods corresponding to the sub-regions.

Optionally, for any first division line in the at least one division line, the electronic device may adjust, according to a feasible implementation manner, a sub-region corresponding to the plurality of groups to be allocated in the resource allocation region: in response to a touch operation on the first division line, display a first time window; and in response to a drag operation on the first division line, adjust first sub-regions on both sides of the first division line.

Optionally, the first time window includes a time instant corresponding to the first division line. For example, the time instant of the timeline corresponding to the first division line is 5 o'clock, and when the user touches the first division line, the top of the first division line may display the first time window, and the time window includes the time instant 5 o'clock.

The process of displaying the first time window will be described below with reference to FIG. 4.

FIG. 4 is a schematic diagram of a process of displaying a first time window according to an embodiment of the present disclosure. Referring to FIG. 4, an electronic device is included. The page displayed by the electronic device includes a division line, a timeline A and a timeline B. A sub-period corresponding to the timeline A is 24 o'clock to 12 o'clock, and a sub-period corresponding to the timeline B is 12 o'clock to 24 o'clock. The division line is located between the timeline A and the timeline B.

Referring to FIG. 4, when the user clicks the division line, the top of the division line may display a first time window, the first time window includes a time instant "12: 00", and the time instant is a time instant corresponding to the division line. In this way, when the user clicks the division line, the user may determine the time instant corresponding to the division line through the first time window, the user experience is improved, and the accuracy of adjustment of the resource to be allocated is improved.

Optionally, in response to a drag on the first division line, first sub-regions on both sides of the first division line are adjusted, where the adjusting includes: in response to a drag operation on the first division line, moving the first division line, and adjusting a timeline of a first sub-region to adjust a sub-period corresponding to a group to be allocated in the first sub-region. For example, when the user moves the first division line, the electronic device may determine a movement distance corresponding to the movement operation, and further control the first division line to move according to the movement distance. For example, when the first division line moves to the left side, the timeline of the first sub-region on the left side of the first division line is shortened from the left, and the timeline of the first sub-region on the right side of the first division line is extended to the right. For example, when the timeline is extended, the sub-period corresponding to the timeline may also be extended, and when the timeline is shortened, the sub-period corresponding to the timeline may also be shortened.

It should be noted that the movement distance of the first division line may be the same as the contraction distance or the extension distance of the first sub-region, which is not limited in the embodiments of the present disclosure.

The time instant of the first time window is updated. For example, when the user drags the first division line, the time instant corresponding to the first division line also changes, and therefore, the electronic device may update the time instant corresponding to the first division line in real time in the first time window.

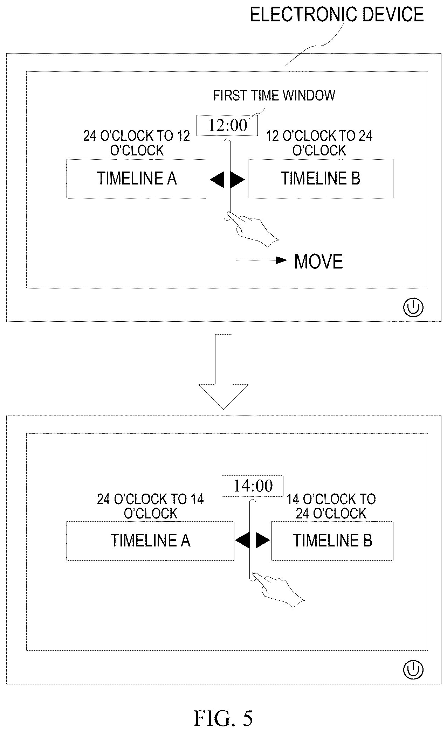

The process of updating the time of the first time window is described below with reference to FIG. 5.

FIG. 5 is a schematic diagram of a process of updating a time instant of a first time window according to an embodiment of the present disclosure. Referring to FIG. 5, an electronic device is included. The display page of the electronic device includes a division line, a timeline A and a timeline B. A sub-period corresponding to the timeline A is 24 o'clock to 12 o'clock, and a sub-period corresponding to the timeline B is 12 o'clock to 24 o'clock. When the user clicks the division line, the electronic device displays a first time window, and a time instant of the first time window is 12 o'clock.

Referring to FIG. 5, when the user moves the division line to the right, the timeline A extends to the right, the timeline B is shortened from the right, the sub-period of the timeline A becomes 24 o'clock to 14 o'clock, and the sub-period of the timeline B becomes 14 o'clock to 24 o'clock. The time instant corresponding to the division line becomes 14 o'clock, and the time instant in the first time window also changes to 14 o'clock (the time instant in the first time window changes in real time with the movement of the division line). In this way, when the user adjusts the sub-period corresponding to the group to be allocated, the resource allocation can be accurately performed according to the first time window, thereby improving the accuracy of resource allocation.

In response to a release operation on the first division line, the moving of the first division line is ceased, the displaying of the first time window is ceased, and the adjusting of the timeline of the first sub-region is ceased. For example, after the user moves the first division line, the user may release the first division line, so that the first division line does not move, and the first time window also disappears. The timeline of the first sub-region on both sides of the first division line also ceases changing.

Optionally, when the moving of the first division line is ceased, in response that the time instant corresponding to the first division line is on an hour or half an hour, ceasing the moving of the first division line; in response that the time instant corresponding to the first division line is a time instant other than a time instant on an hour or half an hour, moving the first division line to a position corresponding to the time instant on an hour or half an hour. For example, when the user releases the first division line, if the time instant corresponding to the first division line is 12 o'clock or 12: 30, the electronic device ceases the moving of the first division line, and in response that the time instant corresponding to the first division line is 11: 55, the electronic device moves the first division line to the position of 12 o'clock (the nearest hour time), and if the time instant corresponding to the first division line is 11: 25, the electronic device moves the first division line to the position of 11: 30 (the nearest half an hour time).

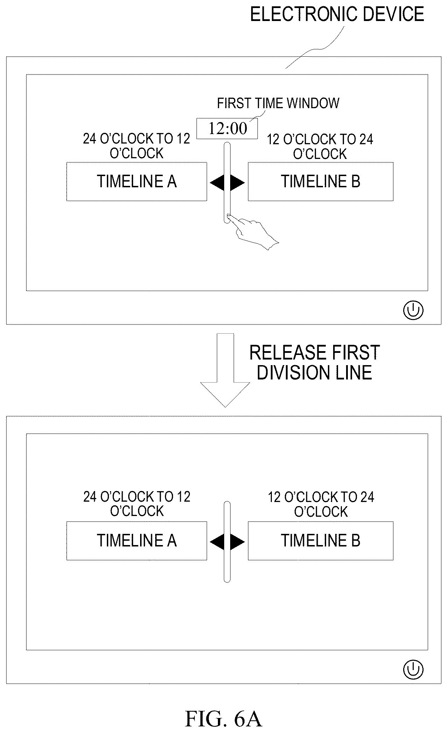

The operation of releasing the first division line by the user is described below with reference to FIGS. 6A to 6B.

FIG. 6A is a schematic diagram of releasing a first division line according to an embodiment of the present disclosure. Referring to FIG. 6A, an electronic device is included. The display page of the electronic device includes a first division line, a timeline A, a timeline B, and a first time window. A sub-period corresponding to the timeline A is 24 o'clock to 12 o'clock, and a sub-period corresponding to the timeline B is 12 o'clock to 24 o'clock. The time instant corresponding to the first division line is 12 o'clock, and the time instant of the first time window is 12 o'clock. When the user releases the first division line, since the time instant corresponding to the first division line is 12 o'clock, the electronic device ceases the moving of the first division line and the displaying of the first time window. In this way, the user can accurately divide the sub-periods corresponding to the groups to be allocated, and the accuracy of resource allocation is improved.

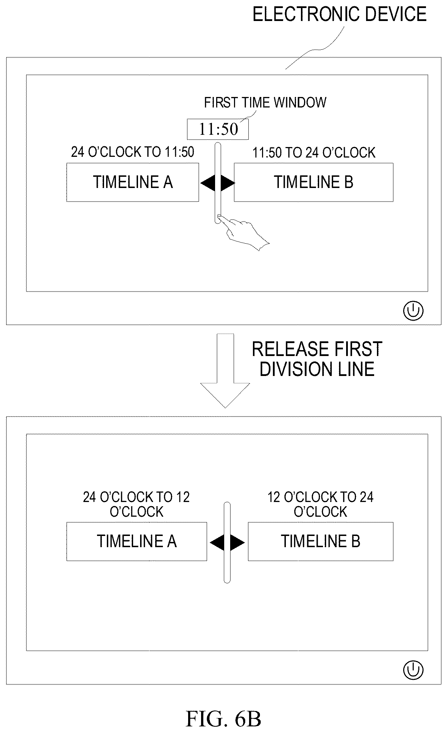

FIG. 6B is another schematic diagram of releasing a first division line according to an embodiment of the present disclosure. Referring to FIG. 6A, an electronic device is included. The display page of the electronic device includes a first division line, a timeline A, a timeline B, and a first time window. A sub-period corresponding to the timeline A is 24 o'clock to 11:50, and a sub-period corresponding to the timeline B is 11:50 to 24 o'clock. The time instant corresponding to the first division line is 11:50, and the time instant of the first time window is 11:50. When the user releases the first division line, since the time instant corresponding to the first division line is 11:50, the electronic device moves the first division line to 12 o'clock, and ceases the displaying of the first time window, and the adjusting of the timeline A and the timeline B. Therefore, through the automatic adsorption function, the user may accurately perform resource allocation, and the resource allocation accuracy is improved.

The embodiment of the present disclosure provides a display method, and the electronic device may display a resource allocation region, where the resource allocation region includes at least one division line, the at least one division line divides the resource allocation region into a plurality of sub-regions corresponding to the plurality of groups to be allocated; in response to a touch operation on the first division line in the plurality of division lines, display a first time window including the time instant corresponding to the first division line; and in response to the dragging operation on the first division line, adjust the timeline in the first sub-region on the two sides of the first division line to change the sub-period corresponding to the first sub-region. In this way, the user can intuitively view the resource allocation information of the plurality of groups to be allocated in total time period of the resource allocation, thereby improving the user experience, and when the user releases the division line, the division line may be automatically attached to the positions of an hour or half an hour, when the user adjusts the division line, the sub-periods corresponding to the first sub-regions on the two sides of the division line may be automatically modified without user input, and the complexity of resource allocation operation is reduced.

On the basis of any one of the above embodiments, the sub-region further includes resource allocation information, and the display method further includes: after adjusting the plurality of sub-regions in the resource allocation region, updating resource allocation information in the plurality of sub-regions.

Optionally, the resource allocation information may be work shift information. For example, the work shift information may include a time period, a fee, a work shift requirement information, and the like. It should be noted that the work shift information may also be other information, which is not limited in the embodiments of the present disclosure.

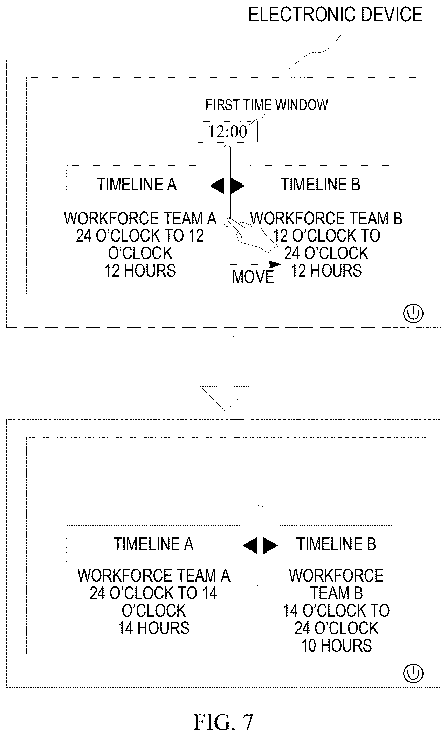

The process of updating the resource allocation information is described below with reference to FIG. 7 by taking the resource allocation information as shift information as an example.

FIG. 7 is a schematic diagram of a process of updating resource allocation information according to an embodiment of the present disclosure. Referring to FIG. 7, an electronic device is included. The display page of the electronic device includes a division line, a first time window, a timeline A and a timeline B. The work shift information corresponding to the work shift region where the timeline A is located includes: workforce team A (workforce team name), 24 o'clock to 12 o'clock (work shift time period), 12 hours (working duration), and work shift information corresponding to the work shift region where the timeline B is located includes: workforce team B (workforce team name), 12 o'clock to 24 o'clock (work shift time period), and 12 hours (working duration). The time instant in the first time window is 12 o'clock.

Referring to FIG. 7, when the user moves the division line to the right, the timeline A is extended to the right, the timeline B is shortened from the right, the time period corresponding to the timeline A is changed to 24 o'clock to 14 o'clock, and the time period corresponding to the timeline B is changed to 14 o'clock to 24 o'clock. The work shift information corresponding to the work shift region where the timeline A is located is updated to be workforce team A, 24 o'clock to 14 o'clock, 14 hours, and work shift information corresponding to the work shift region where the timeline B is located is updated to be: workforce team B, 14 o'clock to 24 o'clock, 10 hours. In this way, when the user adjusts the work shift time period by the division line, the work shift information may also be automatically updated, the user may intuitively view the workforce allocation information, and the user experience is improved.

Optionally, on a basis of the embodiment shown in FIG. 7, the display method further includes: in response to an edition operation on the resource allocation information in a sub-region, adjusting a timeline of the sub-region corresponding to the resource allocation information.

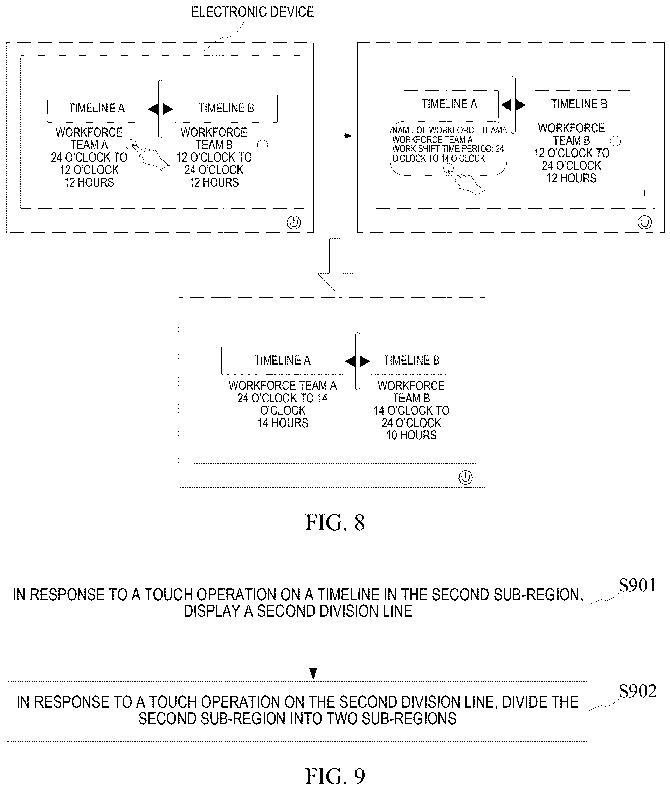

In the following, with reference to FIG. 8, taking the resource allocation information as the work shift information as an example, the method for adjusting the timeline of the work shift region by editing the work shift information is described.

FIG. 8 is a schematic diagram of adjusting a timeline of a work shift region according to an embodiment of the present disclosure. Referring to FIG. 8, an electronic device is included. The display page of the electronic device includes a timeline A, a timeline B, and a division line. The work shift information corresponding to the work shift region where the timeline A is located includes: a workforce team A, 24 o'clock to 14 o'clock, 12 hours, and the work shift information corresponding to the work shift region where the timeline B is located includes: a workforce team B, 12 o'clock to 24 o'clock, 12 hours.

Referring to FIG. 8, when the user clicks the editing control of the work shift region where the timeline A is located, the electronic device may display an editing window, where the editing window is an editing window of the work shift information corresponding to the work shift region where the timeline A is located. The user modifies the work shift period to 24 o'clock to 14 o'clock and clicks the determination control, the electronic device updates the work shift information of the work shift region where the timeline A is located and the work shift information of the work shift region where the timeline B is located, and the electronic device moves the division line to the right, so that the time instant corresponding to the division line is 14 o'clock, and the timeline A is extended to the right, and the timeline B is shortened from the right. In this way, by editing the work shift information, the electronic device may automatically modify the division line and the timeline, thereby the user experience is improved, and the workforce allocation accuracy is improved.

Based on any one of the foregoing embodiments, the display method further includes a sub-region division method, and the division method of the second sub-region is described in detail with reference to FIG. 9 for any one of the plurality of sub-regions.

FIG. 9 is a schematic diagram of a method for dividing a second sub-region according to an embodiment of the present disclosure. Referring to FIG. 9, the method includes the following steps.

S901: in response to a touch operation on a timeline in the second sub-region, a second division line is displayed.

Optionally, the electronic device may display the second division line in a feasible implementation manner: in response to the touch operation on the timeline in the second sub-region, displaying the second division line at a position corresponding to the touch operation; and displaying a second time window, the second time window including a time instant corresponding to the second division line.

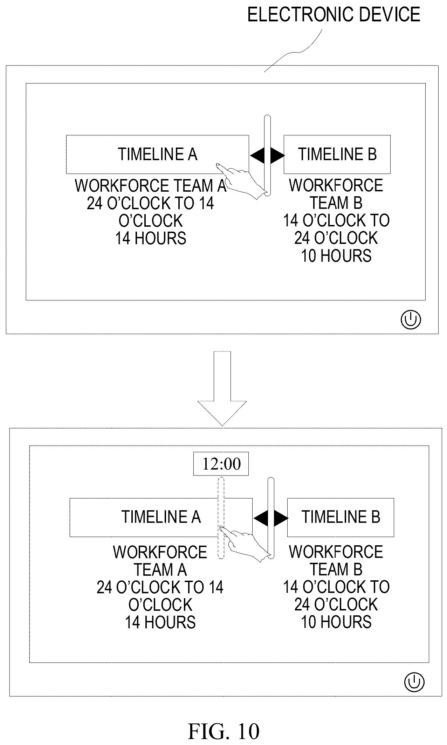

The process of displaying the second division line will be described below with reference to FIG. 10.

FIG. 10 is a schematic diagram of displaying a second division line according to an embodiment of the present disclosure. Referring to FIG. 10, an electronic device is included. The display page of the electronic device includes a timeline A, a timeline B, and a division line. The resource allocation information corresponding to the sub-region where the timeline A is located includes: a workforce team A, 24 o'clock to 14 o'clock, 14 hours, and the resource allocation information corresponding to the sub-region where the timeline B is located includes: a workforce team B, 14 o'clock to 24 o'clock, 10 hours.

Referring to FIG. 10, the user performs a touch operation on the position of the timeline A, the position of the timeline A displays a second division line. The top of the second division line includes a second time window, and since the time instant corresponding to the second division line is 12 o'clock, the time instant in the second time window is 12 o'clock. In this way, the user may accurately determine the time instant corresponding to the clicked position, thereby the complexity of the resource allocation operation is reduced.

S902, in response to a touch operation on the second division line, the second sub-region is divided into two sub-regions.

Optionally, the electronic device may divide the second sub-region into two sub-regions according to the following feasible implementations: in response to a drag operation on the second division line, moving the second division line; updating a time instant in the second time window; in response to a release operation on the second division line, ceasing the displaying of the second time window, and adding a division line at a position corresponding to the release operation to divide the second sub-region into two sub-regions. For example, the user drags the second division line to a position of 12 o'clock, when the user releases the second division line, the position of the 12 o'clock may display a division line, and divide the second sub-region into two sub-regions.

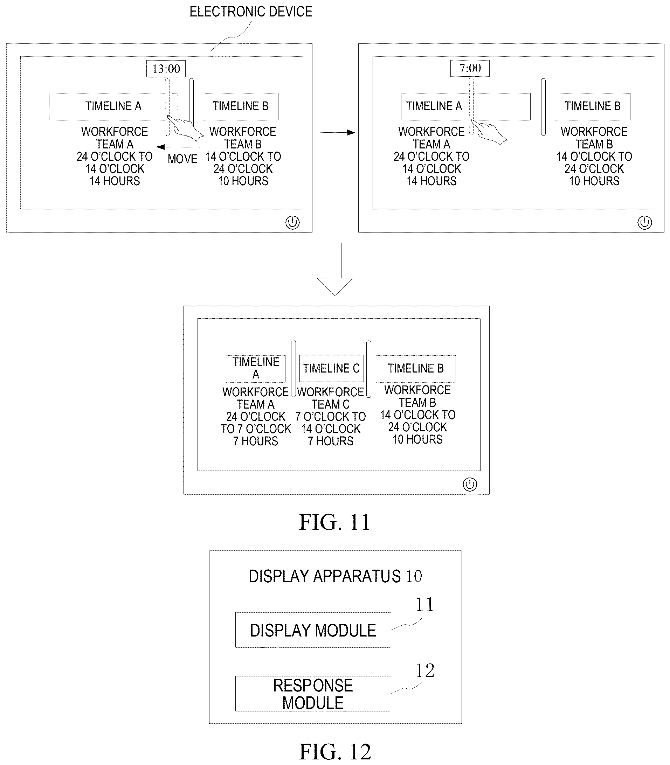

The process of dividing the second sub-region into two sub-regions is described below with reference to FIG. 11.

FIG. 11 is a schematic diagram of a process of dividing two sub-regions according to an embodiment of the present disclosure. Referring to FIG. 11, an electronic device is included. The display page of the electronic device includes a timeline A, a timeline B, and a division line. The resource allocation information corresponding to the sub-region where the timeline A is located includes: a workforce team A, 24 o'clock to 14 o'clock, 14 hours, and the resource allocation information corresponding to the sub-region where the timeline B is located includes: a workforce team B, 14 o'clock to 24 o'clock, 10 hours.

Referring to FIG. 11, for the sub-region where the timeline A is located, the user performs a touch operation on the position of the timeline A, the touch position of the timeline A displays a second division line, the top of the second division line includes a second time window, and since the time corresponding to the second division line is 13 o'clock, the time instant in the second time window is 13 o'clock.

Referring to FIG. 11, when the user moves the second division line to the left, the time instant displayed in the second time window is updated in real time, when the user moves the second division line to the position corresponding to the 7 o'clock, the user releases the second division line, the electronic device adds the division line at the position of the 7 o'clock of the timeline A, and then divides the sub-region where the timeline A is located into the sub-region A and the sub-region B, where the sub-region A includes the timeline A, and the resource allocation information of the sub-region A includes: the workforce team A, 24 o'clock to 7 o'clock, 7 hours, the sub-region B includes the timeline C, and the resource allocation information of the sub-region B includes: the workforce team C, 7 o'clock to 14 o'clock, 7 hours. In this way, the user can flexibly divide any sub-region, thereby the complexity of resource allocation operations is reduced.

FIG. 12 is a schematic structural diagram of a display apparatus according to an embodiment of the present disclosure. Referring to FIG. 12, the display apparatus 10 includes a display module 11 and a response module 12.

The display module 11 is configured to display a resource allocation region, the resource allocation region including at least one division line, the at least one division line dividing the resource allocation region into a plurality of sub-regions corresponding to a plurality of groups to be allocated, each sub-region including a timeline, and a plurality of sub-periods corresponding to a plurality of timelines being consecutive periods.

The response module 12 is configured to, in response to a touch operation on the at least one division line, adjust the sub-regions corresponding to the plurality of groups to be allocated in the resource allocation region, to adjust the sub-periods corresponding to the sub-regions.

According to one or more embodiments of the present disclosure, the response module 12 is specifically configured to:
in response to a touch operation on the first division line, display a first time window, the first time window including a time instant corresponding to the first division line;
in response to a drag operation on the first division line, adjust first sub-regions on both sides of the first division line.

According to one or more embodiments of the present disclosure, the response module 12 is specifically configured to:
in response to a drag operation on the first division line, move the first division line, and adjust a timeline of a first sub-region to adjust a sub-period corresponding to a group to be allocated in the first sub-region;
update a time instant of the first time window;
in response to a release operation on the first division line, cease the moving of the first division line, the displaying of the first time window, and the adjusting of the timeline of the first sub-region.

According to one or more embodiments of the present disclosure, the response module 12 is specifically configured to:
in response that the time instant corresponding to the first division line is on an hour or half an hour, cease the moving of the first division line;
in response that the time instant corresponding to the first division line is a time instant other than a time instant on an hour or half an hour, move the first division line to a position corresponding to the time instant on an hour or half an hour.

According to one or more embodiments of the present disclosure, the response module 12 is further configured to:
after adjusting the plurality of sub-regions in the resource allocation region, update resource allocation information in the plurality of sub-regions.

According to one or more embodiments of the present disclosure, the response module 12 is further configured to:
in response to an edition operation on the resource allocation information in a sub-region, adjust a timeline of the sub-region corresponding to the resource allocation information.

According to one or more embodiments of the present disclosure, the response module 12 is further configured to:
in response to a touch operation on a timeline in the second sub-region, display a second division line;
in response to a touch operation on the second division line, divide the second sub-region into two sub-regions.

According to one or more embodiments of the present disclosure, the response module 12 is specifically configured to:
in response to the touch operation on the timeline in the second sub-region, display the second division line at a position corresponding to the touch operation;
display a second time window, the second time window including a time instant corresponding to the second division line.

According to one or more embodiments of the present disclosure, the response module 12 is specifically configured to:
in response to a drag operation on the second division line, move the second division line;
update a time instant in the second time window;
in response to a release operation on the second division line, cease the displaying of the second time window, and add a division line at a position corresponding to the release operation to divide the second sub-region into two sub-regions.

According to one or more embodiments of the present disclosure, the resource allocation region is a workforce allocation region, the plurality of sub-regions corresponding to the plurality of groups to be allocated are work shift regions corresponding to a plurality of workforce teams, and the sub-period is a work shift time period.

According to one or more embodiments of the present disclosure, the resource allocation information is work shift information, and the work shift information includes time period, fee and work shift requirement information.

The display apparatus provided by the embodiments of the present disclosure may be configured to perform the technical solutions of the foregoing method embodiments, and implementation principles and technical effects thereof are similar, and details are not described herein again in this embodiment.

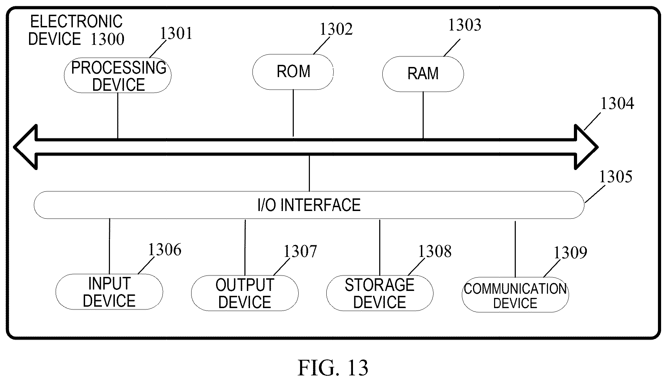

FIG. 13 is a schematic structural diagram of an electronic device according to an embodiment of the present disclosure. Referring to FIG. 13, which illustrates a schematic structural diagram of an electronic device 1300 suitable for implementing embodiments of the present disclosure, and the electronic device 1300 may be a terminal device or an electronic device. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 13 is merely an example, and should not impose any limitation on the functions and scope of use of the embodiments of the present disclosure.

As shown in FIG. 13, the electronic device 1300 may include a processing device (for example, a central processing unit, a graphics processor, etc.) 1301, which may perform various appropriate actions and processing according to a program stored in a read only memory (ROM) 1302 or a program loaded into a random access memory (RAM) 1303 from a storage device 1308. In the RAM 1303, various programs and data required by the operation of the electronic device 1300 are also stored. The processing apparatus 1301, the ROM 1302, and the RAM 1303 are connected to each other through a bus 1304. Input/output (I/O) interface 1305 is also connected to bus 1304.

Generally, the following devices may be connected to the I/O interface 1305: an input device 1306 including, for example, a touch screen, a touch pad, a keyboard, a mouse, a camera, a microphone, an accelerometer, a gyroscope, etc.; an output device 1307 including, for example, a liquid crystal display (LCD), a speaker, a vibrator, etc.; a storage device 1308 including, for example, a magnetic tape, a hard disk, etc. ; and a communication device 1309. The communication device 1309 may allow the electronic device 1300 to communicate wirelessly or wired with other devices to exchange data. While FIG. 13 shows an electronic device 1300 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a computer readable medium, the computer program including program code for performing the method shown in the flowchart. In such embodiments, the computer program may be downloaded and installed from the network through the communication device 1309, or installed from the storage device 1308, or from the ROM 1302. When the computer program is executed by the processing device 1301, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or component, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

The computer-readable medium described above may be included in the server; or may exist alone or in the server.

The computer-readable medium carries one or more programs, and when the one or more programs are executed by the server, the server performs the method shown in the foregoing embodiments.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer and partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the drawings illustrate architecture, functionality, and operation of possible implementations of systems, methods, and computer program products according to various embodiments of the present disclosure. In this regard, each block in the flowcharts or block diagrams may represent a module, program segment, or portion of code that includes one or more executable instructions for implementing the specified logical function. It should also be noted that in some alternative implementations, the functions noted in the blocks may also occur in a different order than that illustrated in the drawings. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of a unit should not be construed as limiting the scope of the unit in a certain case. For example, the first obtaining unit may be further described as "obtaining at least two units of Internet Protocol addresses".

The functions described above may be performed, at least in part, by one or more hardware logic components. For example, without limitation, exemplary types of hardware logic components that may be used to include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

In a first aspect, one or more embodiments of the present disclosure provide a display method, including:
displaying a resource allocation region, the resource allocation region including at least one division line, the at least one division line dividing the resource allocation region into a plurality of sub-regions corresponding to a plurality of groups to be allocated, each sub-region including a timeline, and a plurality of sub-periods corresponding to a plurality of timelines being consecutive periods;
in response to a touch operation on the at least one division line, adjusting the sub-regions corresponding to the plurality of groups to be allocated in the resource allocation region, to adjust the sub-periods corresponding to the sub-regions.

According to one or more embodiments of the present disclosure, for any first division line, in response to a touch operation on the at least one division line, adjusting the sub-regions in the resource allocation region includes:
in response to a touch operation on the first division line, displaying a first time window, the first time window including a time instant corresponding to the first division line;
in response to a drag operation on the first division line, adjusting first sub-regions on both sides of the first division line.

According to one or more embodiments of the present disclosure, in response to a drag on the first division line, adjusting first sub-regions on both sides of the first division line includes:
in response to a drag operation on the first division line, moving the first division line, and adjusting a timeline of a first sub-region to adjust a sub-period corresponding to a group to be allocated in the first sub-region;
updating a time instant of the first time window;
in response to a release operation on the first division line, ceasing the moving of the first division line, the displaying of the first time window, and the adjusting of the timeline of the first sub-region.

According to one or more embodiments of the present disclosure, in response to a release operation on the first division line, ceasing the moving of the first division line includes:
in response that the time instant corresponding to the first division line is on an hour or half an hour, ceasing the moving of the first division line;
in response that the time instant corresponding to the first division line is a time instant other than a time instant on an hour or half an hour, moving the first division line to a position corresponding to the time instant on an hour or half an hour.

According to one or more embodiments of the present disclosure, the sub-region further includes resource allocation information; and the method further includes:
after adjusting the plurality of sub-regions in the resource allocation region, updating resource allocation information in the plurality of sub-regions.

According to one or more embodiments of the present disclosure, the method further includes:
in response to an edition operation on the resource allocation information in a sub-region, adjusting a timeline of the sub-region corresponding to the resource allocation information.

According to one or more embodiments of the present disclosure, for a second sub-region of the plurality of sub-regions, the method further includes:
in response to a touch operation on a timeline in the second sub-region, displaying a second division line;
in response to a touch operation on the second division line, dividing the second sub-region into two sub-regions.

According to one or more embodiments of the present disclosure, in response to a touch operation on a timeline in the second sub-region, displaying a second division line includes:
in response to the touch operation on the timeline in the second sub-region, displaying the second division line at a position corresponding to the touch operation;
displaying a second time window, the second time window including a time instant corresponding to the second division line.

According to one or more embodiments of the present disclosure, in response to a touch operation on the second division line, dividing the second sub-region into two sub-regions includes:
in response to a drag operation on the second division line, moving the second division line;
updating a time instant in the second time window;
in response to a release operation on the second division line, ceasing the displaying of the second time window, and adding a division line at a position corresponding to the release operation to divide the second sub-region into two sub-regions.

According to one or more embodiments of the present disclosure, the resource allocation region is a workforce allocation region, the plurality of sub-regions corresponding to the plurality of groups to be allocated are work shift regions corresponding to a plurality of workforce teams, and the sub-period is a work shift time period.

According to one or more embodiments of the present disclosure, the resource allocation information is work shift information, and the work shift information includes time period, fee and work shift requirement information.

In a second aspect, one or more embodiments of the present disclosure provide a display apparatus including a display module and a response module, where:
the display module 11 is configured to display a resource allocation region, the resource allocation region including at least one division line, the at least one division line dividing the resource allocation region into a plurality of sub-regions corresponding to a plurality of groups to be allocated, each sub-region including a timeline, and a plurality of sub-periods corresponding to a plurality of timelines being consecutive periods;
the response module 12 is configured to, in response to a touch operation on the at least one division line, adjust the sub-regions corresponding to the plurality of groups to be allocated in the resource allocation region, to adjust the sub-periods corresponding to the sub-regions.

According to one or more embodiments of the present disclosure, the response module 12 is specifically configured to:
in response to a touch operation on the first division line, display a first time window, the first time window including a time instant corresponding to the first division line;
in response to a drag operation on the first division line, adjust first sub-regions on both sides of the first division line.

According to one or more embodiments of the present disclosure, the response module 12 is specifically configured to:
in response to a drag operation on the first division line, move the first division line, and adjust a timeline of a first sub-region to adjust a sub-period corresponding to a group to be allocated in the first sub-region;
update a time instant of the first time window;
in response to a release operation on the first division line, cease the moving of the first division line, the displaying of the first time window, and the adjusting of the timeline of the first sub-region.

According to one or more embodiments of the present disclosure, the response module 12 is specifically configured to:
in response that the time instant corresponding to the first division line is on an hour or half an hour, cease the moving of the first division line;
in response that the time instant corresponding to the first division line is a time instant other than a time instant on an hour or half an hour, move the first division line to a position corresponding to the time instant on an hour or half an hour.

According to one or more embodiments of the present disclosure, the response module 12 is further configured to:
after adjusting the plurality of sub-regions in the resource allocation region, update resource allocation information in the plurality of sub-regions.

According to one or more embodiments of the present disclosure, the response module 12 is further configured to:
in response to an edition operation on the resource allocation information in a sub-region, adjust a timeline of the sub-region corresponding to the resource allocation information.

According to one or more embodiments of the present disclosure, the response module 12 is further configured to:
in response to a touch operation on a timeline in the second sub-region, display a second division line;
in response to a touch operation on the second division line, divide the second sub-region into two sub-regions.

According to one or more embodiments of the present disclosure, the response module 12 is specifically configured to:
in response to the touch operation on the timeline in the second sub-region, display the second division line at a position corresponding to the touch operation;
display a second time window, the second time window including a time instant corresponding to the second division line.

According to one or more embodiments of the present disclosure, the response module 12 is specifically configured to:
in response to a drag operation on the second division line, move the second division line;
update a time instant in the second time window;
in response to a release operation on the second division line, cease the displaying of the second time window, and add a division line at a position corresponding to the release operation to divide the second sub-region into two sub-regions.

According to one or more embodiments of the present disclosure, the resource allocation region is a workforce allocation region, the plurality of sub-regions corresponding to the plurality of groups to be allocated are work shift regions corresponding to a plurality of workforce teams, and the sub-period is a work shift time period.

According to one or more embodiments of the present disclosure, the resource allocation information is work shift information, and the work shift information includes time period, fee and work shift requirement information.

In a third aspect, an embodiment of the present disclosure provides an electronic device, including a processor and a memory;
the memory stores computer executable instructions;
the processor executes the computer-executable instruction stored in the memory, to cause the at least one processor executes the display method according to the first aspect and various possible implementations of the first aspect.

In a fourth aspect, an embodiment of the present disclosure provides a computer-readable storage medium, where the computer-readable storage medium stores a computer-executable instructions which, when executed by the processor, implement the display method according to the first aspect and the possible implementations of the first aspect.

According to a fifth aspect, an embodiment of the present disclosure provides a computer program product, including a computer program which, when executed by a processor, implements the display method according to the first aspect and the possible implementations of the first aspect.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological actions, it is to be understood that the subject matter defined in the appended claims is not necessarily limited to the specific features or actions described above. Rather, the specific features and actions described above are merely exemplary forms of implementing the claims.

## Claims

1. A display method, comprising:
displaying a resource allocation region, the resource allocation region comprising at least one division line, the at least one division line dividing the resource allocation region into sub-regions corresponding to a plurality of groups to be allocated, each sub-region comprising a timeline, and a plurality of sub-periods corresponding to a plurality of timelines being consecutive periods;
in response to a touch operation on the at least one division line, adjusting the sub-regions corresponding to the plurality of groups to be allocated in the resource allocation region, to adjust the sub-periods corresponding to the sub-regions.

2. The method of claim 1, for any first division line, in response to a touch operation on the at least one division line, adjusting the sub-regions in the resource allocation region comprises:
in response to a touch operation on the first division line, displaying a first time window, the first time window comprising a time instant corresponding to the first division line;
in response to a drag operation on the first division line, adjusting first sub-regions on both sides of the first division line.

3. The method of claim 2, in response to a drag on the first division line, adjusting first sub-regions on both sides of the first division line comprises:
in response to a drag operation on the first division line, moving the first division line, and adjusting a timeline of a first sub-region to adjust a sub-period corresponding to a group to be allocated in the first sub-region;
updating a time instant of the first time window;
in response to a release operation on the first division line, ceasing the moving of the first division line, the displaying of the first time window, and the adjusting of the timeline of the first sub-region.

4. The method of claim 3, in response to a release operation on the first division line, ceasing the moving of the first division line comprises:
in response that the time instant corresponding to the first division line is on an hour or half an hour, ceasing the moving of the first division line;
in response that the time instant corresponding to the first division line is a time instant other than a time instant on an hour or half an hour, moving the first division line to a position corresponding to the time instant on an hour or half an hour.

5. The method of any of claims 1 to 4, the sub-region further comprises resource allocation information; the method further comprises:
after adjusting the plurality of sub-regions in the resource allocation region, updating resource allocation information in the plurality of sub-regions.

6. The method of claim 5, further comprising:
in response to an edition operation on the resource allocation information in a sub-region, adjusting a timeline of the sub-region corresponding to the resource allocation information.

7. The method of any of claims 1 to 6, for a second sub-region of the plurality of sub-regions, the method further comprising:
in response to a touch operation on a timeline in the second sub-region, displaying a second division line;
in response to a touch operation on the second division line, dividing the second sub-region into two sub-regions.

8. The method of claim 7, in response to a touch operation on a timeline in the second sub-region, displaying a second division line comprises:
in response to the touch operation on the timeline in the second sub-region, displaying the second division line at a position corresponding to the touch operation;
displaying a second time window, the second time window comprising a time instant corresponding to the second division line.

9. The method of claim 7, in response to a touch operation on the second division line, dividing the second sub-region into two sub-regions comprises:
in response to a drag operation on the second division line, moving the second division line;
updating a time instant in the second time window;
in response to a release operation on the second division line, ceasing the displaying of the second time window, and adding a division line at a position corresponding to the release operation to divide the second sub-region into two sub-regions.

10. The method of claim 1, the resource allocation region is a workforce allocation region, the plurality of sub-regions corresponding to the plurality of groups to be allocated are work shift regions corresponding to a plurality of workforce teams, and the sub-period is a work shift time period.

11. The method of claim 5, the resource allocation information is work shift information, and the work shift information comprises time period, fee and work shift requirement information.

12. A display apparatus, comprising a display module and a response module, wherein:
the display module is configured to display a resource allocation region, the resource allocation region comprising at least one division line, the at least one division line dividing the resource allocation region into sub-regions corresponding to a plurality of groups to be allocated, each sub-region comprising a timeline, and a plurality of sub-periods corresponding to a plurality of timelines being consecutive periods;
the response module is configured to, in response to a touch operation on the at least one division line, adjust the sub-regions corresponding to the plurality of groups to be allocated in the resource allocation region, to adjust the sub-periods corresponding to the sub-regions.

13. An electronic device, comprising: a processor and a memory;
the memory stores computer executable instructions;
the processor executes the computer-executable instructions stored in the memory, to cause the processor to execute the display method of any of claims 1 to 11.

14. A computer-readable storage medium storing computer-executable instructions which, when executed by a processor, implement the display method of any of claims 1 to 11.
